(19) Europäisches Patentamt
European Patent Office
Office européen des brevets

(11) EP 2 326 683 B1

(12) **EUROPÄISCHE PATENTSCHRIFT**

(45) Veröffentlichungstag und Bekanntmachung des Hinweises auf die Patenterteilung:
**27.03.2019 Patentblatt 2019/13**

(21) Anmeldenummer: **09782070.8**

(22) Anmeldetag: **21.08.2009**

(51) Int Cl.:
***C08G 77/10*** *(2006.01)*

(86) Internationale Anmeldenummer:
**PCT/EP2009/060818**

(87) Internationale Veröffentlichungsnummer:
**WO 2010/031654 (25.03.2010 Gazette 2010/12)**

(54) **ÄQUILIBRIERUNG VON SILOXANEN AN WASSERHALTIGEN SULFONSAUREN KATIONENAUSTAUSCHERHARZEN**

EQUILIBRATION OF SILOXANES ON SULPHONIC ACID CATION EXCHANGE RESINS CONTAINING WATER

ÉQUILIBRAGE DE SILOXANES SUR DES RÉSINES ÉCHANGEUSES DE CATIONS D'ACIDE SULFONIQUE CONTENANT DE L'EAU

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **18.09.2008 DE 102008042181**

(43) Veröffentlichungstag der Anmeldung:
**01.06.2011 Patentblatt 2011/22**

(73) Patentinhaber: **Evonik Degussa GmbH**
**45128 Essen (DE)**

(72) Erfinder:
- **KNOTT, Wilfried**
  **45355 Essen (DE)**
- **HENNING, Frauke**
  **45130 Essen (DE)**
- **KLEIN, Klaus-Dieter**
  **45481 Mülheim an der Ruhr (DE)**
- **DUDZIK, Horst**
  **45326 Essen (DE)**

(74) Vertreter: **Evonik Patent Association**
**c/o Evonik Industries AG**
**IP Management**
**Bau 1042A/PB 15**
**Paul-Baumann-Straße 1**
**45764 Marl (DE)**

(56) Entgegenhaltungen:
**DE-A1- 10 301 355**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 326 683 B1

**Beschreibung**

Gegenstand der Erfindung ist ein Verfahren zur Herstellung von Äquilibrierungsprodukten von Organosiloxanen durch Umlagerung der Siloxanbindung an einem wasserhaltigen Kationenaustauscherharz, die so erhältlichen Organopolysiloxane sowie deren Verwendung.

Äquilibrierungen von Siloxanen an Ionenaustauscherharzen gehören zum Stand der Technik. Unter der Vielzahl bekannter Systeme ist der getrocknete Amberlyst-Ionenaustauscher (insbesondere Amberlyst® 15) eine häufig genutzte katalytische Phase.

Insbesondere wird ein Verfahren zur Äquilibrierung von Poly(methylhydrogen)-polydimethylsiloxan-Copolymeren der Formel 1 an Kationenaustauscherharzen vorgestellt, wobei die Kationenaustauscherharze einen Wassergehalt von 8 bis 20 Gewichtsprozent aufweisen können, sowie so hergestellte Äquilibrierungsprodukte der Poly(methylhydrogen)-polydimethylsiloxan-Copolymere.

Unter Äquilibrierung wird hier die gleichgewichtsbildende Umlagerung der Siloxanbindungen in äquilibrierte Poly(methylhydrogen)-polydimethylsiloxan-Copolymere folgender Struktur verstanden.

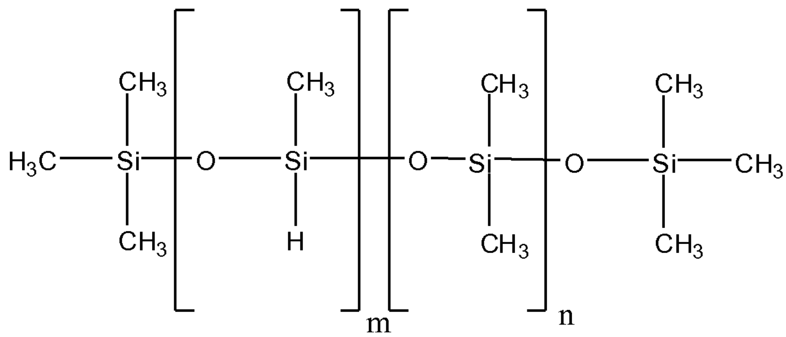

Formel (1)

Technisch werden die durch diese Struktur gekennzeichneten Poly(methylhydrogen)-polydimethylsiloxan-Copolymere durch die Reorganisation oder Äquilibrierung von Siloxancyclen mit längerkettigen Poly(methylwasserstoff)siloxanen und Hexamethyldisiloxan an sauren Katalysatoren gewonnen. Als saure Katalysatoren gelangen beispielsweise säureaktivierte Bleicherden (Bentonite, Montmorillonite, Fullererden, etc.) und sulfonsaure, makrovernetzte Kationenaustauscherharze zum Einsatz.

In DE 103 01 355 (US 2004147703) wird ein Verfahren zur Herstellung von Äquilibrierungsprodukten von Organosiloxanen durch Umlagerung der Siloxanbindung an einem Kationenaustauscherharz beschrieben, in dem man ein als Ausgangsmaterial benutztes Organosiloxan oder ein Organosiloxangemisch bei einer Temperatur von 10 °C bis 120 °C mit einem makrovernetzten, Sulfonsäuregruppen enthaltenden Kationenaustauscherharz in Kontakt bringt und die erhaltenen äquilibrierten Organosiloxane isoliert, welches dadurch gekennzeichnet ist, dass man ein Kationenaustauscherharz einsetzt, dessen Produkt P aus spezifischer Oberfläche und mittlerem Porendurchmesser $P \geq 2{,}2 \times 10^{-3}$ $m^3/kg$ beträgt und dessen spezifische Oberfläche $A \geq 35\ m^2/g$ ist. Es wird ein getrocknetes Kationenaustauscherharz bzw. ein Kationenaustauscherharz mit einem nicht näher spezifizierten (niedrigen) Wassergehalt eingesetzt.

Die EP 1 367 079 (US 2003224925) weist im Zusammenhang mit der Äquilibrierung von Polydimethylsiloxanen an sulfonsauren Harzen und deren nachfolgender Reaktivierung durch Behandlung mit niedermolekularen Siloxanen auf die Bedeutung des Wassergehaltes am sulfonsauren Kationenaustauscherharz hin und gibt an, dass eine Wasserbeladung von < 7 bevorzugt 5 Massenprozent einzustellen ist, um optimale Polymerisationsbedingungen zu erhalten. Die nicht vorveröffentlichte deutsche Patentanmeldung DE 10 2007 055484.4 stellt auf ein Verfahren zur Reorganisation von Polydimethylsiloxanen an sulfonsauren Kationenaustauscherharzen ab, dass dadurch gekennzeichnet ist, dass sulfonsaure Kationenaustauscherharze mit Wassergehalten von 8 bis 25 Gewichtsprozent eingesetzt werden. Mit der Option, die derartig gewonnenen, nichtfunktionellen Siliconöle einem nachgeschalteten thermischen Trennverfahren zu unterziehen, wird im Rahmen dieser technischen Lehre die Gewinnung Kettenlängen-definierter Polydimethylsiloxane als Stabilisatorkomponenten in hochelastischen Polyurethanschäumen beschrieben.

Verglichen mit den zuvor genannten Verfahren zur Äquilibrierung von Siliconölen stellt sich die Äquilibrierung copolymerer Dimethylsiloxan-poly(methyl)wasserstoffsiloxane jedoch deutlich anspruchsvoller dar. Ein grundsätzliches Problem erwächst allein aus der Empfindlichkeit SiH-Gruppen aufweisender Siloxane gegenüber Wasser bei Anwesenheit starker Säuren, aus der sich potentiell die Gefahr eines dehydrogenativen SiH-Verlustes unter Bildung von SiOH-Funktionen mit der Möglichkeit einer weiteren Quervernetzung des Siloxangerüstes durch Kondensation ergibt. Die technische Äquilibrierung von SiH-Funktionen tragenden Siloxanen bedarf jedoch auch immer des Einsatzes stark acider

Katalysatoren, damit sich das chemische Gleichgewicht in ökonomisch vertretbaren Zeiten einstellt. Im Hinblick auf den Einsatz saurer Festphasenkatalysatoren vom Typ der sulfonsauren Kationenaustauscherharze bedeutet das aber auch, dass der Wassergehalt nicht so stark herabgesetzt sein darf, dass sich eine unzureichende protische Aktivität am Katalysator ergibt. Säurekatalysierte Nebenreaktionen wie der zuvor beschriebene dehydrogenative Abbau von SiH-Funktionen können zu einer unerwünschten chemischen Trocknung des sulfonsauren Harzes führen und dessen Brauchbarkeit als Äquilibrierkatalysator bis hin zu einer vollständigen Desaktivierung beeinträchtigen. Diese Beobachtung ist für die Nutzung sulfonsaurer Harze als Äquilibrierkatalysatoren bei der Produktion von Dimethylsiloxan-poly(methyl)wasserstoffsiloxanen von großer Bedeutung, da erst vielfach wiederholter Einsatz des sulfonsauren Harzes die Prozessökonomie sicherstellt. Frühzeitige Desaktivierung der Festphase verbunden mit der Notwendigkeit des Katalysatoraustauschs machen die Nutzung solcher Systeme unattraktiv.

Dimethylsiloxan-poly(methyl)wasserstoffsiloxane stellen insbesondere wertvolle Edukte in der Synthese von PU-Stabilisatoren und hier insbesondere für Heißweichschaumsysteme dar. Die erzielte Qualität des Äquilibrierergebnisses bei diesen copolymeren Wasserstoffsiloxanen dokumentiert sich zumeist bereits in dem Folgeschritt einer SiC-verknüpfenden Modifizierung des erhaltenen Äquilibrats mit Allylpolyethern bzw. -polyethergemischen. Haben Molekulargewichtsverteilung und die Mikrostruktur der erhaltenen Oligomeren nicht den Gleichgewichtszustand erreicht, liefert die Hydrosilylierung, d.h., die Edelmetall katalysierte SiC-Verknüpfungsreaktion zwischen SiH-Gruppen aufweisendem Siloxan und Allylpolyether(n) stets stark trübe Siliconpolyethercopolymere, die bei Verwendung als PU-Schaumstabilisator in Weichschaumsystemen zu starken Schaumrückfällen bis hin zum Schaumkollaps führen.
Der anwendungstechnische Test, d.h. der Einsatz der via Äquilibrierung und nachfolgender Hydrosilylierung zugänglichen Siliconpolyethercopolymeren in Polyurethan-Heißweichschaumsystemen ist extrem empfindlich und somit eine geeignete Methode zur Beurteilung der Güte des beschrittenen Syntheseweges.

Die zu lösende technische Aufgabe bestand demgemäß nun darin, ein System zu finden, das die Äquilibrierung von SiH-Gruppen tragenden Siloxanen, insbesondere von copolymeren Dimethylsiloxan-poly(methyl)wasserstoffsiloxanen, so gestattet, dass die widersprüchlichen Anforderungen einer zügigen Äquilibrierkinetik, einer hohen Katalysatorstandfestigkeit und einer optimalen Produktqualität gleichzeitig erfüllt werden.

Erstaunlicherweise wurde nun gefunden, dass neben den bereits in der DE 103 01 355 (US 2004147703) genannten geometrischen Parametern (spezifische Oberfläche und mittlerer Porendurchmesser) auch der Wassergehalt des eingesetzten sulfonsauren Harzes entscheidend sowohl für die Äquilibrierkinetik, die Katalysatorstandfestigkeit als auch für die erzielte Qualität der erhaltenen Poly(methylhydrogen)-polydimethylsiloxan-Copolymere ist.
Abweichend von der bei der Äquilibrierung nichtfunktioneller Polydimethylsiloxane in der EP 1 367 079 (US 2003224925) gefundenen vorteilhaften Wasserbeladung von < 7 bevorzugt 5 Massenprozent entfaltet ein makrovernetztes sulfonsaures Kationenaustauscherharz in der Äquilibrierung von Poly-(methylhydrogen)-polydimethylsiloxan-Copolymeren dann seine optimale Wirksamkeit, wenn dessen Produkt P aus spezifischer Oberfläche und mittlerem Porendurchmesser $P \geq 2{,}2 \times 10^{-3}$ $m^3/kg$ beträgt und dessen spezifische Oberfläche $A \geq 35$ $m^2/g$ und dessen Wasserbeladung zwischen < 20 und > 8% liegen.
Dieser Befund ist für den Fachmann keinesfalls vorhersehbar, da die niedrige Wasserbehaftung eines sulfonsauren Kationenaustauscherharzes in der EPA 1 367 079 Voraussetzung für den Äquilibriererfolg bei nichtfunktionellen Siliconölen darstellt und des weiteren bekannt ist, wie empfindlich SiH-Gruppen aufweisende Siloxane mit Wasser in Gegenwart starker Säuren reagieren können (dehydrogenativer SiH-Verlust unter Bildung von SiOH-Funktionen mit der Gefahr der weiteren Quervernetzung durch Kondensation,).

Die vorgenannte Aufgabe wird in einer Ausführungsform gelöst durch ein Verfahren zur Herstellung von Äquilibrierungsprodukten von Organosiloxanen durch Umlagerung der Siloxanbindung an einem wasserhaltigen Kationenaustauscherharz, wobei man ein als Ausgangsmaterial benutztes Organosiloxan oder ein Organosiloxangemisch bei einer Temperatur von 10 °C bis 120 °C mit einem makrovernetzten, wasserhaltigen und Sulfonsäuregruppen enthaltenden Kationenaustauscherharz in Kontakt bringt und die erhaltenen äquilibrierten Organosiloxane isoliert, dadurch **gekennzeichnet**, **dass** man ein wasserhaltiges Kationenaustauscherharz einsetzt, dessen Produkt P aus deren spezifischer Oberfläche und deren mittlerem Porendurchmesser $P \geq 2{,}2 \times 10^{-3}$ $m^3/kg$ und die spezifische Oberfläche $A \geq 35$ $m^2/g$ betragen und zudem einen Wassergehalt von 8 bis 25 Gewichtsprozent (bezogen auf das Gewicht des Ionenaustauscherharz) aufweist.

Überraschenderweise wurde gefunden, dass beispielsweise wasserhaltiges Lewatit® K 2621 als sulfonsaures Ionenaustauscherharz die zeitadäquat zügige Einstellung des Äquilibriergleichgewichtes ermöglicht und dass die so gewonnenen Wasserstoffsiloxane klare Flüssigkeiten bilden, die vorzügliche Ausgangsmaterialien zur Herstellung von Polyurethan-Weichschaumstabilisatoren sind.

Dieser Befund ist für den Fachmann überraschend, da dieses polymere Harz als makroporöses sulfoniertes Polystyrol eine identische chemische Grundstruktur wie Amberlyst® 15 besitzt und darüber hinaus auch ähnliche makroskopische Eigenschaften zeigt, wie in Tabelle I wiedergegeben ist:

Tabelle I:

| Ionenaustauscherharz | Oberfläche [$m^2$/g] | Mittlerer Porendurchmesser [nm] |
|---|---|---|
| Amberlyst® 15 | 45 | 25 |
| Lewatit® K 2621 | 40 | 65 |

Weiterhin war nicht zu erwarten, dass der Wassergehalt des Kationenaustauscherharzes die Äquilibrierungsreaktion günstig beeinflussen könnte.

In einer bevorzugten Ausführungsform ist das Verfahren dadurch gekennzeichnet, dass man niedermolekulare, insbesondere lineare Organopolysiloxane depolymerisiert und äquilibriert. Insbesondere isoliert man ein Organosiloxan, das sich im Gleichgewicht der chemischen Verbindungen befindet. Es wird insbesondere ein Organosiloxan als Ausgangsmaterial verwendet, dessen Viskosität bis zu etwa 10.000 cP beträgt.

Vorzugsweise werden Siloxane und H-Siloxane eingesetzt, die 3 bis 200 Si-Atome aufweisen.

In einer weiteren Ausführungsform wird ein wasserhaltiges Kationenaustauscherharz verwendet, dessen mittlerer Porendurchmesser wenigstens etwa 65 nm beträgt und dessen durchschnittliche spezifische Oberfläche etwa 30 bis 50 $m^2$/g beträgt.

Der Wassergehalt des Kationenaustauscherharzes beträgt bevorzugt 8 bis 20 Gewichts-%, insbesondere 8 bis 15 Gewichts-%.

Die Umlagerung wird vorzugsweise bei einer Temperatur von etwa 35 °C bis etwa 100 °C durchgeführt.

Erfindungsgemäß wird das Verfahren in einer weiteren Ausführungsform kontinuierlich durchgeführt; man trennt aus dem ausfließenden Organosiloxangemisch eine Fraktion mit dem gewünschten Siedebereich ab, führt die Fraktion mit dem nicht gewünschten Siedebereich in die Einspeisung aus Organosiloxanen zurück.

Insbesondere wird als Ausgangsmaterial ein Gemisch aus Hexamethyldisiloxan, Poly(methyl)wasserstoffsiloxan und Siloxancyclen verwendet.

Eine weitere Ausführungsform ist die Verwendung von Organosiloxanen zur Knüpfung von SiC-Bindungen, wobei man ein Gemisch dieser Organosiloxane und Allylpolyether mit einem Platinmetallkomplex in Kontakt bringt und das gewonnene Polysiloxan als Polyurethan-Weichschaumstabilisator einsetzt.

Mit Hilfe der vorliegenden Erfindung ist es möglich, statistisch einheitlich aufgebaute Organowasserstoffsiloxane mit definiertem Gleichgewicht von linearen und cyclischen Verbindungen durch Äquilibrierung eines Gemisches von Methylwasserstoffpolysiloxan und cyclischen oder linearen, gegebenenfalls Wasserstoff-funktionalisierten Polysiloxanen unter Verwendung eines definierten makrovernetzten, Sulfonsäuregruppen-enthaltenden Kationenaustauscherharzes herzustellen. In Bezug auf diese und weitere Definitionen wird ausdrücklich auf die DE-A-21 52 270 Bezug genommen.

Es gilt festzustellen, dass durchgängig alle Weichschaumstabilisatoren (Polyethersiloxane), die auf der Basis von Amberlyst® 15, Purolite® CT 169 D (Oberfläche 35 bis 50 $m^2$/g, mittlerer Porendurchmesser 24,0 bis 42,5 nm) oder Purolite® CT 165 (Oberfläche 2,5 $m^2$/g, mittlerer Porendurchmesser > 100), als Ionenaustauschersystem hergestellt wurden, trübe Flüssigkeiten sind, die zum Kollaps des PU-Schaums führen. Wesentliche Parameter zur Beschreibung der erfindungsgemäß einzusetzenden Katalysatorphasen sind also die spezifische Oberfläche und die Porosität, d. h. der mittlere Porendurchmesser. Bildet man aus beiden Größen ein Produkt, so hat dieses den Charakter einer inversen Dichte (Volumen: Masse) und erlaubt eine saubere Differenzierung der funktionsfähigen von nichterfindungsgemäß einzusetzenden Ionenaustauschern.

Am beispielhaft eingesetzten Ionenaustauscher Lewatit® K 2621 sieht die Betrachtung wie folgt aus:

$$40\ m^2/g \times 65\ nm = 2.600\ m^2\ nm/g = 2{,}6 \times 10^{-3}\ m^3/kg.$$

Das erfindungsgemäß eingesetzte, vorzugsweise sulfonsaure Kationenaustauscherharz mit Wassergehalten zwischen 8 bis 20 Gew.% kann ausgehend von Kationenaustauscherharzen mit höheren Wassergehalten, durch physikalische und/oder chemische Trocknung hergestellt werden. Die physikalische Trocknung kann z. B. in einem Trockenschrank vorzugsweise bei Temperaturen von 40 bis 100 °C erfolgen, wobei zur Unterstützung der Trocknung auch bei verringertem Druck bzw. unter Anlegung eines Inertgasstroms gearbeitet werden kann. Der erzielte Trocknungsfortschritt kann dabei durch eine regelmäßige Wasserbestimmung (beispielsweise durch Karl-Fischer Titration oder aber durch Differenzwägung) beobachtet und gesteuert werden. Alternativ können die erfindungsgemäß eingesetzten sulfonsauren Kationenaustauscherharze auch chemisch getrocknet werden, indem man sie, wie z.B. in der EP 1 367 079 beschrieben, mit Siloxanen niedrigen Molekulargewichts in Kontakt bringt.

Die Herstellung der erfindungsgemäß eingesetzten sulfonsauren Kationenaustauscherharze mit Wassergehalten von 8 bis 20 Gew.% kann optional auch von Kationentauscherharzen verminderten Wassergehalts ausgehen. Dazu wird das Kationenaustauscherharz mit Wasser in Kontakt gebracht. Im einfachsten Fall reicht es aus, das sulfonsaure Harz über einen definierten Zeitraum an gewöhnlicher Atmosphäre zu lagern, so dass dessen intrinsische Hygroskopizität zu einer erhöhten Wasserbeladung führt.
Wird das im Hinblick auf seinen Wassergehalt definierte sulfonsaure Kationenaustauscherharz zur Äquilibrierung von Polydimethylsiloxanen eingesetzt, kann es vorteilhaft sein, das Reaktandensystem mit definierten Mengen an Wasser zu versetzen, insbesondere um einer Wasserverarmung des Harzes - und hierbei insbesondere unter die erfindungsgemäße Grenze von 8 Gew.-% Wasser - hervorgerufen durch Wechselwirkungen mit anderen Komponenten des Reaktandensystems, wirksam zu begegnen. Das Zudosieren kann kontinuierlich oder diskontinuierlich erfolgen. Der gegebenenfalls notwendige Wasserzusatz kann durch die Ermittlung des im Reaktionsaustrag enthaltenen Wassers oder wahlweise durch (regelmäßige) Bestimmung des Wassergehalts im Kationenaustauscherharz ermittelt werden.

Als Kationenaustauscherharze können prinzipiell alle sulfonsauren Kationenaustauscherharze eingesetzt werden. Geeignete Kationenaustauscherharze sind beispielsweise solche, die durch Sulfonierung von Phenol/Aldehyd-Kondensaten oder von Cooligomeren von aromatischen Vinylverbindungen hergestellt werden. Beispiele für aromatische Vinylverbindungen zur Herstellung der Cooligomere sind: Styrol, Vinyltoluol, Vinylnaphthalin, Vinylethylbenzol, Methylstyrol, Vinylchlorbenzol, Vinylxylol und Divinylbenzol. Insbesondere werden die Cooligomeren, die durch Umsetzung von Styrol mit Divinylbenzol entstehen, als Vorstufe für die Herstellung von Kationenaustauscherharzen mit Sulfonsäuregruppen verwendet. Die Harze können prinzipiell gelförmig, makroporös oder schwammförmig hergestellt werden. Die Eigenschaften dieser Harze, insbesondere spezifische Oberfläche, Porosität, Stabilität, Quellung bzw. Schrumpfung und Austauschkapazität, können durch den Herstellprozess variiert werden. Vorzugsweise werden keine gelartigen sondern poröse, bevorzugt makroporöse sulfonsaure Kationenaustauscherharze eingesetzt.

Im erfindungsgemäßen Verfahren können bevorzugt übliche makroporöse sulfonsaure Kationenaustauscherharze in ihrer aciden, der sogenannten "H-Form" Verwendung finden. Unter den geeigneten Polymerphasen des Styrol-Divinylbenzol-Typs, die im Handel erhältlich sind, wird hier ein Kationenaustauscherharz bevorzugt, dessen Produkt P aus spezifischer Oberfläche und mittlerem Porendurchmesser $P \geq 2{,}2 \times 10^{-3}\ m^3/kg$ und dessen spezifische Oberfläche $A \geq 35\ m^2/g$ beträgt. Vorzugsweise wird ein Kationenaustauscherharz eingesetzt, dessen mittlere spezifische Oberfläche im Bereich von 35 bis 50 $m^2/g$ liegt. Besonders bevorzugt wird Lewatit® K 2621 (Bayer AG) als sulfonsaures Kationenaustauscherharz eingesetzt.

Neben dem Einsatz frischen Kationenaustauscherharzes als Katalysator kann aber auch ein bereits nach dem erfindungsgemäßen Verfahren zur Reorganisation von Polydimethylsiloxanzusammensetzungen verwendetes sulfonsaures Harz benutzt werden. Geringe Restmengen an Reorganisat, die dann an der Oberfläche des Katalysators anhaften können, stören dabei üblicherweise nicht.

Als Siloxan-Rohstoffe können in dem erfindungsgemäßen Verfahren alle üblichen geradkettigen und/oder cyclischen Siloxane eingesetzt werden. Vorzugsweise werden Gemische, die niedermolekulare lineare Dimethylsiloxane, gemeinsam mit cyclischen Siloxanen und Hexamethyldisiloxan als Kettenterminator aufweisen, reorganisiert. Die Obergrenze der Viskosität der hierbei eingesetzten Polydimethylsiloxane sollte vorzugsweise maximal 500 mPas betragen. Die Kettenlänge der eingesetzten Siloxane liegt vorzugsweise im Bereich von 2 bis 200 Si-Atome.

Als Siloxan-Rohstoffe können vorzugsweise Gemische aufweisend oder bestehend aus Hexamethyldisiloxan und/oder Octamethyltrisiloxan und Siloxancyclen, wie z. B. Hexamethylcyclotrisiloxan ($D_3$), Octamethylcyclotetrasiloxan ($D_4$) und/oder Decamethylcyclopentasiloxan ($D_5$) eingesetzt werden. Bevorzugt werden technische Gemische enthaltend oder vorzugsweise bestehend aus Hexamethyldisiloxan sowie $D_4$ und $D_5$ verwendet.

Die Äquilibrierung wird vorzugsweise bei einer Temperatur von 10 °C bis 110 °C, bevorzugt bei einer Temperatur von 25 °C bis 100 °C, durchgeführt. Die Äquilibrierung kann wahlweise bei Unterdruck, Normaldruck oder Überdruck durchgeführt werden. Unter Normaldruck soll hier, ergänzend zu der eingeführten Definition, der jeweils herrschende Luftdruck der umgebenden Atmosphäre verstanden werden. Vorzugsweise wird die Äquilibrierung bei einem Druck von 950 mbar bis 1.100 mbar, besonders bevorzugt bei 1.013 mbar durchgeführt.

Es kann vorteilhaft sein, die Äquilibrierung in Reaktionszeiten von 20 Minuten bis zu 7 Stunden, vorzugsweise in 30 Minuten bis zu 5 Stunden durchzuführen.

Ganz besonders bevorzugt wird die Äquilibrierung bei einer Temperatur von 25 °C bis 100 °C, einem Druck von ca. 1013 $\pm$ 10 mbar und in einem Zeitraum von 30 Minuten bis zu 5 Stunden durchgeführt, bevorzugt findet die Raktion bei 70°C statt.

Falls gewünscht, kann die Äquilibrierung auch in Gegenwart eines Lösungsmittels durchgeführt werden. Als Lösungsmittel geeignet sind alle diejenigen Solventien, die sich bei der Äquilibrierung inert gegenüber Kationenaustauscherharz (Katalysator), Edukten und Produkten verhalten. Besonders bevorzugt wird die Äquilibrierung jedoch in Abwesenheit eines Lösungsmittels durchgeführt.

Die bezogen auf das Reaktionsgemisch einzusetzende Menge des Kationenaustauscherharzes, welches Wasser in den oben genannten Grenzen aufweist, beträgt vorzugsweise von 8 bis 25 Gew.-%, besonders bevorzugt von 8 bis 15 Gew.-%.

Das erfindungsgemäße Verfahren kann diskontinuierlich oder aber kontinuierlich durchgeführt werden.

Es kann vorteilhaft sein, aus dem Äquilibrat, welches als Reaktionsgemisch der erfindungsgemäßen Äquilibrierung erhalten wird, eine Teilmenge mit einem gewünschten Siedebereich abzutrennen. Der verbleibende Rest des Äquilibrat, der nicht den gewünschten Siedebereich aufweist, kann als Ausgangsmaterial (Organosiloxane) wieder in der Äquilibrierung eingesetzt werden. Besonders bevorzugt, insbesondere wenn das Verfahren kontinuierlich ausgeführt wird, wird aus dem erhaltenen Polysiloxangemisch eine Teilmenge mit einem gewünschten Siedebereich abgetrennt und der Rest, der nicht den gewünschten Siedebereich aufweist, wird als Ausgangsmaterial (Organosiloxane) wieder in der Äquilibrat eingesetzt. Diese Abtrennung kann z. B. durch eine einfache thermische Trennung (wie z.B. durch eine einfache Destillation oder durch ähnliche Maßnahmen) erfolgen.

Weitere Ausgestaltungen des erfindungsgemäßen Verfahrens ergeben sich aus den Ansprüchen.

Die erfindungsgemäßen Äquilibrierungsprodukte und deren Verwendung werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt vollständig zum Offenbarungsgehalt der vorliegenden Erfindung gehören.

Anhand folgender Beispiele soll der Vorteil der vorliegenden Erfindung aufgezeigt werden.

Ausführungsbeispiele:

Vorbereitung der im erfindungsgemäßen und im nicht erfindungsgemäßen Beispiel eingesetzten sulfonsauren Ionenaustauscherharze

Lewatit® K-2621 wurde in der handelsüblichen stark wasserhaltigen Form in offenen Abdampfschalen für einen Zeitraum von 8 bzw. 18 Stunden in einen auf 60 °C beheizten Trockenschrank gestellt und dann in noch warmen Zustand in inertisierte Gefäße unter Feuchtigkeitsausschluss überführt und aufbewahrt. Der Wassergehalt betrug nach Karl-Fischer-Titration für das 8 Stunden getrocknete Harz 25 % bzw. 12 % für das 18 Stunden getrocknete Harz.

Amberlyst® 15 wurde in der handelsüblichen 5 % Wasser enthaltenden Form direkt bezogen. Eine Teilmenge dieses Harzes wurde ca. 5 Stunden unter gewöhnlicher Atmosphäre gelagert, so dass sich aufgrund der intrisischen Hygroskopizität eine Wasserbeladung von 10 % einstellte.

Beispiel 1:

Herstellung eines Wasserstoffsiloxans (erfindungsgemäßes Beispiel)

Ein Gemisch bestehend aus 223,0 g Decamethylcyclopentasiloxan ($D_5$), 20,2 g Poly(methyl)wasserstoffsiloxan PTF1 (SiH-Gehalt: 15,75 Val/kg) und 6,9 g Hexamethyl-disiloxan HMDS (61,5 mol $D_5$ : 0,135 mol PTF1 : 0,865 mol HMDS) wurde mit 3 m-% des vorgetrockneten Ionenaustauscherharzes Lewatit® K-2621 (12% Wassergehalt) versetzt und für 6 Stunden bei 70 °C unter ständigem Rühren äquilibriert und nach Abkühlen des Reaktionsgemisches wird das Ionenaustauscherharz durch Filtration abgetrennt. Der Gehalt an aktivem SiH wurde mit Hilfe der Gasvolumetrie (Zersetzung einer eingewogenen Siloxanprobe mit Hilfe einer Natriumbutylatlösung) zu 1,26 Val/kg bestimmt. Die Viskosität des Wasserstoffsiloxans lag bei 86,4 mPas (25 °C).

Die $^{29}$Si-NMR-Spektroskopie wies dem erfindungsgemäß gewonnenen Wasserstoffsiloxan eine mittlere Struktur zu, die sich durch folgende Formel wiedergeben ließ:

$$(CH_3)SiO\text{-}[(CH_3)_2SiO\text{-}]_{61,5}[CH_3)HSiO\text{-}]_{6,5}Si(CH_3)_3$$

Der durch Filtration abgetrennte sulfonsaure Ionenaustauscher wurde analog der beschriebenen Vorgehensweise 6 weitere Male zur Äquilibrierung vorbezeichneten Wasserstoffsiloxans eingesetzt, wobei die SiH-Gehalte der Äquilibrate im Bereich zwischen 1,26 und 1,27 Val/ kg und die Viskositäten zwischen 85,5 und 86,8 mPas lagen. Begleitende $^{29}$Si-NMR-Spektroskopie sicherte die oben angegebene Strukturformel.

Die Wiederholbarkeit der Reaktion belegt die Wiederverwendbarkeit des Kationenaustauscherharzes.

Vergleichsbeispiel 2:

Herstellung eines Wasserstoffsiloxans (nicht erfindungsgemäß)

Ein Gemisch bestehend aus 223,0 g Decamethylcyclopentasiloxan ($D_5$), 20,2 g Poly(methyl)wasserstoffsiloxan

PTF1 (SiH-Gehalt: 15,75 Val/kg) und 6,9 g Hexamethyl-disiloxan HMDS (61,5 mol $D_5$ : 0,135 mol PTF1 : 0,865 mol HMDS) wurde mit 3 m-% Ionenaustauscherharz Amberlyst® 15 (10 % Wassergehalt) versetzt und für 6 Stunden bei 70 °C unter ständigem Rühren äquilibriert und nach Abkühlen des Reaktionsgemisches das Ionenaustauscherharz durch Filtration abgetrennt. Der Gehalt an aktivem SiH wurde mit Hilfe der Gasvolumetrie zu 1,26 Val/kg bestimmt. Die Viskosität des Wasserstoffsiloxans lag bei 74,3 mPas (25 °C).

Die $^{29}$Si-NMR-Spektroskopie wies dem so gewonnenen Wasserstoffsiloxan die gleiche mittlere Struktur wie in Beispiel 1 zu. Es zeigt keine signifikanten Unterschiede zu Beispiel 1. Trotzdem zeigt der Vergleich der Beispiele 4 und 5 das das Verhalten unterschiedlich ist:

$$(CH_3)SiO\text{-}[(CH_3)_2SiO\text{-}]_{61,5}[CH_3)HSiO\text{-}]_{6,5}Si(CH_3)_3$$

Vergleichsbeispiel 3:

Herstellung eines Wasserstoffsiloxans (nicht erfindungsgemäß)

Ein Gemisch bestehend aus 223,0 g Decamethylcyclopentasiloxan ($D_5$), 20,2 g Poly(methyl)wasserstoffsiloxan PTF1 (SiH-Gehalt: 15,75 Val/kg) und 6,9 g Hexamethyl-disiloxan HMDS (61,5 mol $D_5$ : 0,135 mol PTF1 : 0,865 mol HMDS) wurde mit 3 m-% eines mäßig vorgetrockneten Ionenaustauscherharzes Lewatit® K-2621 (25% Wassergehalt) versetzt und für 6 Stunden bei 70 °C unter ständigem Rühren äquilibriert und nach Abkühlen des Reaktionsgemisches das Ionenaustauscherharz durch Filtration abgetrennt. Der Gehalt an aktivem SiH wurde mit Hilfe der Gasvolumetrie zu 1,26 Val/kg bestimmt. Die Viskosität des Wasserstoffsiloxans lag bei 75,2 mPas (25 °C).

Die $^{29}$Si-NMR-Spektroskopie wies dem so gewonnenen Wasserstoffsiloxan folgende mittlere Struktur zu:

$$(CH_3)SiO\text{-}[(CH_3)_2SiO\text{-}]_{61,5}[CH_3)HSiO\text{-}]_{6,5}Si(CH_3)_3$$

Beispiel 4:

(Weiterverarbeitung der in Beispiel 1 gewonnenen Wasserstoffsiloxane zu Polysiloxan-Polyoxyalkylen-Blockmischcopolymerisaten)

In einem mit Tropftrichter, Rührer, Thermometer, Gaseinleitung und Rückflusskühler versehenen Kolben wurden

(1) 259,2 g (0,185 Mol) eines Polyethers der mittleren Formel $CH_2=CH\text{-}CH_2O\text{-}(C_2H_4O\text{-})_5(C_3H_6O\text{-})_{21}CH_3$,
(2) 86,4 g (0,062 Mol) eines Polyethers der mittleren Formel $CH_2=CH\text{-}CH_2O\text{-}(C_2H_4O\text{-})_{26}(C_3H_6O\text{-})_4CH_3$;
(3) 234,5 g (0,061 Mol) eines Polyethers der mittleren Formel $CH_2=CH\text{-}CH_2O\text{-}(C_2H_4O\text{-})_{45}(C_3H_6O\text{-})_{34}CH_3$;
(4) 156,4 g (0,041 Mol) eines Polyethers der mittleren Formel $CH_2=CH\text{-}CH_2O\text{-}(C_2H_4O\text{-})_{36}(C_3H_6O\text{-})_{38}H$ und
(5) 37,0 g (0,061 Mol) eines Polyethers der mittleren Formel $CH_2=CH\text{-}CH_2O\text{-}(C_2H_4O\text{-})_{14}CH_3$

gemeinsam mit 15,4 mg cis- $(NH_3)_2PtCl_2$ vorgelegt. Die Apparatur wurde durch einen leichten Stickstoffstrom inertisiert. Nach Aufheizen auf 120 °C wurden jeweils 240 g (= 0,301 Mol SiH) der Wasserstoffsiloxane aus Beispiel 1 im Verlauf von 30 Minuten zugetropft. Man ließ die Reaktionsgemische 3 Stunden nachreagieren und erzielte einen quantitativen SiH-Umsatz (gasvolumetrisch bestimmt durch Umsetzung mit NatriumbutylatLösung). Man erhielt nach Filtration über eine Seitz-K-300-Filterscheibe klare, leicht gelbliche Produkte.

Beispiel 5:

(Weiterverarbeitung der in Beispiel 2 und 3 gewonnenen Wasserstoffsiloxane zu Polysiloxan-Polyoxyalkylen-Blockmischcopolymerisaten)

Analog Beispiel 4 wurden in einem mit Tropftrichter, Rührer, Thermometer, Gaseinleitung und Rückflusskühler versehenen Kolben

(1) 259,2 g (0,185 Mol) eines Polyethers der mittleren Formel $CH_2=CH\text{-}CH_2O\text{-}(C_2H_4O\text{-})_5(C_3H_6O\text{-})_{21}CH_3$,
(2) 86,4 g (0,062 Mol) eines Polyethers der mittleren Formel $CH_2=CH\text{-}CH_2O\text{-}(C_2H_4O\text{-})_{26}(C_3H_6O\text{-})_4CH_3$,
(3) 234,5 g (0,061 Mol) eines Polyethers der mittleren Formel $CH_2=CH\text{-}CH_2O\text{-}(C_2H_4O\text{-})_{45}(C_3H_6O\text{-})_{34}CH_3$,

(4) 156,4 g (0,041 Mol) eines Polyethers der mittleren Formel $CH_2=CH-CH_2O-(C_2H_4O-)_{36}(C_3H_6O-)_{38}H$ und
(5) 37,0 g (0,061 Mol) eines Polyethers der mittleren Formel $CH_2=CH-CH_2O-(C_2H_4O-)_{14}CH_3$

gemeinsam mit 15,4 mg cis-$(NH_3)_2PtCl_2$ vorgelegt. Die Apparatur wurde durch einen leichten Stickstoffstrom inertisiert. Nach Aufheizen auf 120 °C wurden jeweils 240 g (= 0,301 Mol SiH) der nicht erfindungsgemäßen Wasserstoffsiloxane aus Vergleichsbeispielen 2 und 3 im Verlauf von 30 Minuten zugetropft. Man ließ die Reaktionsgemische 3 Stunden nachreagieren und erzielte einen quantitativen SiH-Umsatz (gasvolumetrisch bestimmt durch Umsetzung mit Natriumbutylat-Lösung). Trotz des quantitativen SiH-Umsatzes waren die erhaltenen Polysiloxan-Polyether-Copolymeren trüb-opaque, leicht gelbliche Flüssigkeiten, die auch nach Filtration über eine Seitz-K-300-Filterscheibe nicht klar wurden.

Beispiel 6:

Die anwendungstechnische Prüfung der hergestellten Schaumstabilisatoren erfolgte mit einer Schaumrezeptur auf folgende Weise:
Jeweils 300 Teile eines handelsüblichen Polyethers zur Herstellung von flexiblen Polyurethanschaumstoffen, welcher im mittleren Molekül drei Hydroxylgruppen aufwies und ein Molekulargewicht von 3.500 hatte, wurden mit 15 Teilen Wasser, 15 Teilen eines physikalischen Treibmittels, der entsprechenden Menge des zu testenden Schaumstabilisators gemäß dem erfindungsgemäßen Beispiel 1 bzw. dem Vergleichsbeispiel 2, 0,33 Teilen Diethylentriamin und 0,69 Teilen Zinnoctoat unter gutem Rühren vermischt. Nach Zugabe von 189 Teilen Toluoldiisocyanat (Isomerengemisch 2,4 und 2,6 im Verhältnis 4 : 1) wurde mit einem Glattrührer 7 Sekunden bei 2.500 U/Min. gerührt und das Gemisch in einen oben offenen Kasten gegossen. Es entstand ein feinporiger Schaumstoff, der durch folgende Parameter charakterisiert wurde:

1. Das Rücksacken des Schaumstoffes am Ende der Steigphase (in Tabelle II als "Rückfall" bezeichnet).
2. Die Zahl der Zellen pro Zentimeter Schaum, die man mikroskopisch ermittelte.

Die Tabelle II stellt die Messwerte für 2 verschiedene Konzentrationen (1,8 Teile/1,5 Teile) der nach dem erfindungsgemäßem Verfahren gewonnenen (Beispiel 1/ 1-7) sowie der nicht erfindungsgemäß hergestellten Stabilisatoren (Produkte der Vergleichsbeispiele 2 und 3) gegenüber.

Tabelle II:

| Beispiel | Rückfall | Zellen pro Zentimeter |
|---|---|---|
| Beispiel 1 /1 | 0,7 / 1,4 | 15 |
| Beispiel 1 /2 | 0,8 / 1,5 | 14 |
| Beispiel 1 /3 | 0,7 / 1,4 | 15 |
| Beispiel 1 /4 | 0,7 / 1,5 | 14 |
| Beispiel 1 /5 | 0,8 / 1,4 | 14 |
| Beispiel 1 /6 | 0,7 / 1,4 | 15 |
| Beispiel 1 /7 | 0,7 / 1,4 | 15 |
| Vergleichsbeispiel 2 | Kollaps | n.b. |
| Vergleichsbeispiel 3 | Kollaps | n.b. |

Die Tabelle II zeigt die Reaktionsergebnisse nach insgesamt 7 Cyclen der wiederholten Äquilibrierung unter Verwendung des gleichen Kationenaustauscherharzes. Es belegt die Wiederverwendbarkeit und Wiederholbarkeit der Reaktion, ohne das es einer "Reaktivierung" oder Nachbehandlung des Kationenaustauscherhharzes bedarf.

## Patentansprüche

1. Verfahren zur Herstellung von Äquilibrierungsprodukten von Organosiloxanen durch Umlagerung der Siloxanbindung an einem sulfonsauren Kationenaustauscherharz, wobei man ein als Ausgangsmaterial benutztes Organosiloxan oder ein Organosiloxangemisch bei einer Temperatur von 10 °C bis 120 °C mit einem makrovernetzten, Sulfonsäuregruppen enthaltenden Kationenaustauscherharz in Kontakt bringt und die erhaltenen äquilibrierten Organosiloxane isoliert, **dadurch gekennzeichnet, dass** man ein Kationenaustauscherharz einsetzt, dessen Produkt P aus deren spezifischer Oberfläche und deren mittlerem Porendurchmesser $P \geq 2{,}2 \times 10^{-3}$ $m^3/kg$ und die spezifische Oberfläche $A \geq 35$ $m^2/g$ betragen und der Wassergehalt des sulfonsauren Kationenaustauschers zwischen 8 und 20 Gewichtsprozent bezogen auf die Masse des eingesetzten Kationenaustauschers beträgt, wobei ein sulfonsaures Kationenaustauscherharz benutzt wird, das bereits in einem Verfahren zur Reorganisation von Polydimethylsiloxanzusammensetzungen verwendet wurde.

2. Verfahren nach Anspruch 1, **dadurch gekennzeichnet, dass** man als niedermolekulare Organopolysiloxane Siloxane und H-Siloxane mit 3 bis 200 Si-Atomen depolymerisiert.

3. Verfahren nach Anspruch 1, **dadurch gekennzeichnet, dass** man als niedermolekulare Organopolysiloxane Siloxane und H-Siloxane mit 3 bis 200 Si-Atomen äquilibriert.

4. Verfahren nach zumindest einem der Ansprüche 1, 2 oder 3, **dadurch gekennzeichnet, dass** man als Lösungsmittel einen aliphatischen Kohlenwasserstoff verwendet.

5. Verfahren nach zumindest einem der Ansprüche 1 bis 4, **dadurch gekennzeichnet, dass** man ein Organopolysiloxan isoliert, das sich im Gleichgewicht der chemischen Verbindungen befindet.

6. Verfahren nach zumindest einem der Ansprüche 1 bis 5, **dadurch gekennzeichnet, dass** man ein Kationenaustauscherharz verwendet, dessen mittlerer Porendurchmesser wenigstens etwa 65 nm beträgt.

7. Verfahren nach zumindest einem der Ansprüche 1 bis 6, **dadurch gekennzeichnet, dass** man die Umlagerung bei einer Temperatur von etwa 35 bis etwa 80 °C durchführt.

8. Verfahren nach zumindest einem der Ansprüche 1 bis 7, **dadurch gekennzeichnet, dass** man ein Kationenaustauscherharz verwendet, dessen durchschnittliche spezifische Oberfläche etwa 30 bis 50 $m^2/g$ beträgt.

9. Verfahren nach zumindest einem der Ansprüche 1 bis 8, **dadurch gekennzeichnet, dass** man das Verfahren kontinuierlich durchführt, aus dem erhaltenen Organosiloxangemisch eine Fraktion mit dem gewünschten Siedebereich abtrennt und die Fraktion mit dem nicht gewünschten Siedebereich in die Einspeisung aus Organosiloxanen zurückführt.

10. Verfahren nach zumindest einem der Ansprüche 1 bis 9, **dadurch gekennzeichnet, dass** man ein Gemisch aus Hexamethyldisiloxan, Poly(methyl)wasserstoffsiloxan und Siloxancyclen als Ausgangsmaterial verwendet.

## Claims

1. Process for producing equilibration products of organosiloxanes by rearrangement of the siloxane bond to a sulphonated cation exchange resin, wherein an organosiloxane used as starting material or an organosiloxane mixture is brought into contact with a macrocrosslinked sulphonic-acid-group-containing cation exchange resin at a temperature of 10°C to 120°C and the resultant equilibrated organosiloxanes are isolated, **characterized in that** use is made of a cation exchange resin, the product P of the specific surface area thereof and the median pore diameter thereof of which is $P \geq 2.2 \times 10^{-3}$ $m^3/kg$ and the specific surface area A is $\geq 35$ $m^2/g$ and the water content of the sulphonated cation exchanger is between 8 and 20 per cent by weight based on the mass of the cation exchanger used, wherein a sulphonated cation exchanger resin is used which has already been used in a process for the reorganization of polydimethylsiloxane compositions.

2. Process according to Claim 1, **characterized in that** siloxanes and H-siloxanes having 3 to 200 Si atoms are depolymerized as low-molecular-weight organopolysiloxanes.

3. Process according to Claim 1, **characterized in that** siloxanes and H-siloxanes having 3 to 200 Si atoms are equilibrated as low-molecular-weight organopolysiloxanes.

4. Process according to at least one of Claims 1, 2 or 3, **characterized in that**, as solvent, use is made of an aliphatic hydrocarbon.

5. Process according to at least one of Claims 1 to 4, **characterized in that** an organopolysiloxane which is in equilibrium of the chemical compounds is isolated.

6. Process according to at least one of Claims 1 to 5, **characterized in that** use is made of a cation exchange resin the median pore diameter of which is at least about 65 nm.

7. Process according to at least one of Claims 1 to 6, **characterized in that** the rearrangement is carried out at a temperature of about 35 to about 80°C.

8. Process according to at least one of Claims 1 to 7, **characterized in that** use is made of a cation exchange resin the average specific surface area of which is about 30 to 50 $m^2$/g.

9. Process according to at least one of Claims 1 to 8, **characterized in that** the process is carried out continuously, a fraction having the desired boiling range is separated off from the resultant organosiloxane mixture and the fraction having the unwanted boiling range is recirculated into the feed of organosiloxanes.

10. Process according to at least one of Claims 1 to 9, **characterized in that** use is made of a mixture of hexamethyldisiloxane, poly(methyl)hydrogensiloxane and siloxane cyclics as starting material.

**Revendications**

1. Procédé de fabrication de produits d'équilibrage d'organosiloxanes par déplacement de la liaison siloxane sur une résine échangeuse de cations d'acide sulfonique, selon lequel un organosiloxane ou mélange d'organosiloxanes utilisé en tant que matériau de départ est mis en contact à une température de 10 °C à 120 °C avec une résine échangeuse de cations macroréticulée, contenant des groupes acide sulfonique, et les organosiloxanes équilibrés obtenus sont isolés, **caractérisé en ce qu'**une résine échangeuse de cations dont le produit P de sa surface spécifique et de son diamètre de pore moyen $P \geq 2{,}2 \times 10^{-3}$ $m^3$/kg, et dont la surface spécifique $A \geq 35$ $m^2$/g est utilisée, et la teneur en eau de l'échangeur de cations d'acide sulfonique est comprise entre 8 et 20 pour cent en poids, par rapport à la masse de l'échangeur de cations utilisé, une résine échangeuse de cations d'acide sulfonique qui a déjà été utilisée dans un procédé de réorganisation de compositions de polydiméthylsiloxane étant utilisée.

2. Procédé selon la revendication 1, **caractérisé en ce que** des siloxanes et des H-siloxanes contenant 3 à 200 atomes Si sont dépolymérisés en tant qu'organopolysiloxanes de faible poids moléculaire.

3. Procédé selon la revendication 1, **caractérisé en ce que** des siloxanes et des H-siloxanes contenant 3 à 200 atomes Si sont équilibrés en tant qu'organopolysiloxanes de faible poids moléculaire.

4. Procédé selon au moins l'une quelconque des revendications 1, 2 ou 3, **caractérisé en ce qu'**un hydrocarbure aliphatique est utilisé en tant que solvant.

5. Procédé selon au moins l'une quelconque des revendications 1 à 4, **caractérisé en ce qu'**un organopolysiloxane qui se trouve dans l'équilibre des composés chimiques est isolé.

6. Procédé selon au moins l'une quelconque des revendications 1 à 5, **caractérisé en ce qu'**une résine échangeuse de cations est utilisée, dont le diamètre de pore moyen est d'au moins environ 65 nm.

7. Procédé selon au moins l'une quelconque des revendications 1 à 6, **caractérisé en ce que** le déplacement est réalisé à une température d'environ 35 à environ 80 °C.

8. Procédé selon au moins l'une quelconque des revendications 1 à 7, **caractérisé en ce qu'**une résine échangeuse de cations dont la surface spécifique moyenne est d'environ 30 à 50 $m^2$/g est utilisée.

9. Procédé selon au moins l'une quelconque des revendications 1 à 8, **caractérisé en ce que** le procédé est réalisé en continu, une fraction du mélange d'organosiloxanes obtenu ayant la plage d'ébullition souhaitée est séparée, et la fraction ayant la plage d'ébullition non souhaitée est recyclée dans l'alimentation d'organosiloxanes.

10. Procédé selon au moins l'une quelconque des revendications 1 à 9, **caractérisé en ce qu'**un mélange d'hexaméthyldisiloxane, de poly(méthyl)hydrogénosiloxane et de cycles siloxane est utilisé en tant que matériau de départ.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 10301355
- US 2004147703 A
- EP 1367079 A
- US 2003224925 A
- DE 102007055484
- DE 2152270 A